# EUROPEAN PATENT SPECIFICATION

(11) **EP 2 195 517 B1**
(45) Date of publication and mention of the grant of the patent: **10.08.2016**
(21) Application number: 08772242.7
(22) Date of filing: 30.06.2008
(51) Int. Cl.: F02D 35/02, F02P 5/152, F02D 41/00, G01L 23/22

(54) **AIRCRAFT ENGINE CYLINDER ASSEMBLY KNOCK DETECTION AND SUPPRESSION SYSTEM**
SYSTEM ZUR ERFASSUNG UND BEKÄMPFUNG VON KLOPFEN IN DER ZYLINDERANORDNUNG VON FLUGZEUGTRIEBWERKEN
SYSTÈME DE DÉTECTION ET DE SUPPRESSION DE COGNEMENT D'ENSEMBLE CYLINDRE DE MOTEUR D'AÉRONEF

(30) Priority: 25.09.2007 US 903880
(43) Date of publication of application: 16.06.2010
(73) Proprietor: Lycoming Engines A Division of Avco Corporation, Williamsport, PA 17701 (US)
(72) Inventor: MORRIS, James Paul, Montoursville Pennsylvania 17754 (US); SCHNEIDER, Charles, Watsontown Pennsylvania 17777 (US)
(74) Representative: Heine, Christian Klaus
(86) International application number: PCT/US2008/068767
(87) International publication number: WO 2009/042266

(56) References cited:
- US-A- 2 220 558
- US-A- 4 802 454
- US-A- 5 706 784
- US-A1- 2006 144 365
- US-B1- 6 246 953
- US-B1- 6 378 494

## Description

### BACKGROUND

Conventional aircraft engines include multiple cylinder assemblies used to drive a crankshaft. During operation, in order to drive the crankshaft, each cylinder assembly receives fuel provided from a fuel pump via fuel injectors. The order of fuel injection and ignition timing of a spark plug for each cylinder assembly must be properly controlled in order to cause the crankshaft to generate an output torque in an effective manner.

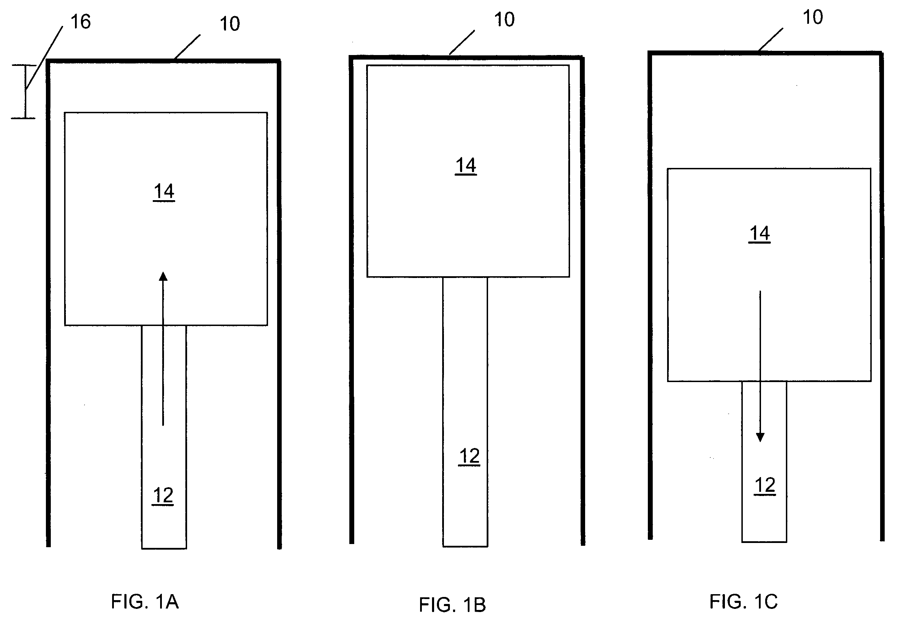

For example, a spark plug of each cylinder assembly ignites a fuel and air mixture as received from a corresponding fuel injector. Under normal operating conditions, as indicated in Figs. 1A, the spark plug initiates combustion of the fuel and air mixture when the crankshaft (not shown) positions a connecting rod 12 and a piston 14 within about 15 to 40 degrees 16 before a top dead center (TDC) position within the cylinder assembly 10. Top dead center positioning of the piston 14, the point of maximum compression of the fuel and air mixture, is illustrated in Fig. 1B. Ignition of the fuel and air mixture at a time prior to the piston 14 reaching the top dead center position maximizes the pressure required to force the piston 14 and connecting rod 12 downward to drive the crankshaft, as indicated in Fig. 1C.

In certain engine operating conditions, an abnormally high combustion pressure will occur after TDC, as illustrated in Fig 1C. This abnormally high combustion pressure is caused by the fuel and air mixture burning at an increased rate causing an audible vibration, known as knock or detonation, within the cylinder assembly 10. The occurrence of detonation events over time can damage or destroy the cylinder assembly 10. The prevention of such knock or detonation has been the subject of earlier patents like US 2,220,558 which discloses the use of a knock detection sensor for controlling the operation conditions of the internal combustion engine.

### SUMMARY

Certain conventional engines include one or more knock detections sensor to detect knocking in the cylinder assemblies. For example, automobile engines typically utilize a single knock sensor to detect knocking for all of the cylinder assemblies of the engine. Accordingly, for a six cylinder engine, a single sensor detects vibrations associated with knocking within any of the six cylinders. A processor associated with the automobile engine receives a vibration signal from the single detector and, based upon processing using a variety of algorithms, detects the particular cylinder from which the knocking occurs. Based upon this detection, the engine's processor prevents further knocking in the cylinder assembly by retarding the timing of ignition of the fuel in the cylinder. This detection and suppression scheme, however, can be prone to errors. Before the engine's processor can suppress the knocking in a cylinder, the processor must first detect the particular cylinder from which the knocking occurred. In the case where the engine generates a relatively large amount of noise, the processor can detect the background engine noise as knocking within a particular cylinder and erroneously retard the timing of ignition of fuel in one of the cylinder. Alternately, when the engine generates a relatively large amount of noise, the processor can erroneously detect knocking as coming from a non-knocking cylinder, as opposed to a knocking cylinder. In such a case, the engine processor can erroneously retard the timing of ignition of fuel in the non-knocking cylinder as opposed to the knocking cylinder.

In another example, certain conventional aircraft engines include knock detection systems utilizing multiple sensors and a display. In these systems, each sensor monitors a corresponding cylinder assembly. In the case where a sensor detects knocking in a particular cylinder assembly, the sensor provides a signal to the display. In response, the display provides a visual indication to the aircraft pilot, alerting the pilot to the presence of knocking in the particular cylinder assembly. Based upon the alert, the pilot manually causes changes to certain operating conditions of the engine, such as the ignition timing of the spark plugs.

Embodiments of the present invention provide an aircraft engine cylinder assembly knock detection and suppression system. The knock detection and suppression system includes a set of knock detection sensors and an engine controller such as a Full Authority Digital Engine Controller (FADEC). Each cylinder assembly of the aircraft engine carries a knock detection sensor and each knock detection sensor is electrically coupled to the engine controller. The use of individual knock detection sensors allows direct detection of knocking in each corresponding cylinder assembly while minimizing erroneous detection of knocking in otherwise normally operating cylinder assemblies. During operation, each knock detection sensor transmits signals to the engine controller where the signals correspond to detected cylinder assembly vibrations. As the engine controller receives input signals from the sensors, the engine controller filters the input signals to distinguish the input signals as being associated as either knocking, as caused by detonation of fuel and air within the cylinder assembly, or as a non-knock event, as caused by some other vibration of the cylinder assembly. In the case where the engine controller detects the occurrence of one or more knock events in a particular cylinder assembly, the engine controller automatically reduces the spark timing for that cylinder assembly and/or increases the volume of fuel delivered to that cylinder assembly. Accordingly, the engine controller provides an automated response to knocking in a particular cylinder assembly in order to suppress or eliminate detonation.

In one arrangement, a method for suppressing knocking in a cylinder assembly of an aircraft engine includes receiving an input signal from at least one knock detection sensor of a set of knock detection sensors, each knock detection sensor of the set of knock detection sensors being carried by a corresponding cylinder assembly of an aircraft engine. The method includes detecting knocking in a cylinder assembly corresponding to that cylinder's knock detection sensor when the input signal exceeds a signal threshold value. The method also includes, in response to detecting the knock in a cylinder assembly, adjusting the cylinder operating parameters for that cylinder assembly.

In one arrangement, an aircraft engine controller is configured to receive an input signal from at least one knock detection sensor of a set of knock detection sensors, each knock detection sensor of the set of knock detection sensors being carried by a corresponding cylinder assembly of the aircraft engine. The aircraft engine controller is configured to detect knocking in the cylinder assembly corresponding to the at least one knock detection sensor when the input signal exceeds a signal threshold value. The aircraft engine controller is configured to, in response to detecting knocking in a cylinder assembly, adjust the cylinder operating parameter of that cylinder assembly corresponding to its knock detection sensor.

In one arrangement, an aircraft engine control system includes an aircraft engine having a set of cylinder assemblies and a set of corresponding knock detection sensors, one knock detection sensor per cylinder assembly. The engine controller is configured to receive an input signal from at least one of the knock detection sensor of a set of knock detection sensors. The engine controller is configured to detect knocking in the cylinder assembly corresponding to its knock detection sensor when the input signal exceeds a signal threshold value. The engine controller is configured to, in response to detecting knocking in a cylinder assembly, adjust cylinder operating parameters of that cylinder assembly corresponding to its knock detection sensor.

### BRIEF DESCRIPTION OF THE DRAWINGS

The foregoing and other objects, features and advantages will be apparent from the following description of particular embodiments of the invention, as illustrated in the accompanying drawings in which like reference characters refer to the same parts throughout the different views. The drawings are not necessarily to scale, emphasis instead being placed upon illustrating the principles of various embodiments of the invention.
Fig. 1A illustrates a schematic representation of a cylinder assembly where the piston approaches a top dead center position within the cylinder assembly.
Fig. 1B illustrates a schematic representation of the cylinder assembly of Fig. 1A where the piston reaches a top dead center position within the cylinder assembly.
Fig. 1C illustrates a schematic representation of the cylinder assembly of Fig. 1A where the piston moves to an after to dead center position within the cylinder assembly.
Fig. 2 illustrates a top view of a schematic representation of an aircraft engine where each cylinder assembly of the engine carries a corresponding knock detection sensor.
Fig. 3 is a flowchart of a procedure performed by the engine controller of Fig. 3 to suppress knocking in the cylinder assembly of the aircraft engine.
Fig. 4 illustrates a schematic representation of an engine controller configured to receive data signals from the knock detection sensors carried by the aircraft engine.
Fig. 5 is a flowchart of a procedure performed by the engine controller of Fig. 3 to adjust the voltage values for input signals received from the knock detection sensors.

### DETAILED DESCRIPTION

Embodiments of the present invention provide an aircraft engine cylinder assembly knock detection and suppression system. The knock detection and suppression system includes a set of knock detection sensors and an engine controller such as a Full Authority Digital Engine Controller (FADEC). Each cylinder assembly of the aircraft engine carries a knock detection sensor and each knock detection sensor is electrically coupled to the engine controller. The use of individual knock detection sensors allows direct detection of knocking in each corresponding cylinder assembly while minimizing erroneous detection of knocking in otherwise normally operating cylinder assemblies. During operation, each knock detection sensor transmits signals to the engine controller where the signals correspond to detected cylinder assembly vibrations. As the engine controller receives input signals from the sensors, the engine controller filters the input signals to distinguish the input signals as being associated as either knocking, as caused by detonation of fuel and air within the cylinder assembly, or as a non-knock event, as caused by some other vibration of the cylinder assembly. In the case where the engine controller detects the occurrence of one or more knock events in a particular cylinder assembly, the engine controller automatically reduces the spark timing for that particular cylinder assembly and/or increases the volume of fuel delivered to that particular cylinder assembly. Accordingly, the engine controller provides an automated response to knocking in a particular cylinder assembly in order to suppress or eliminate detonation.

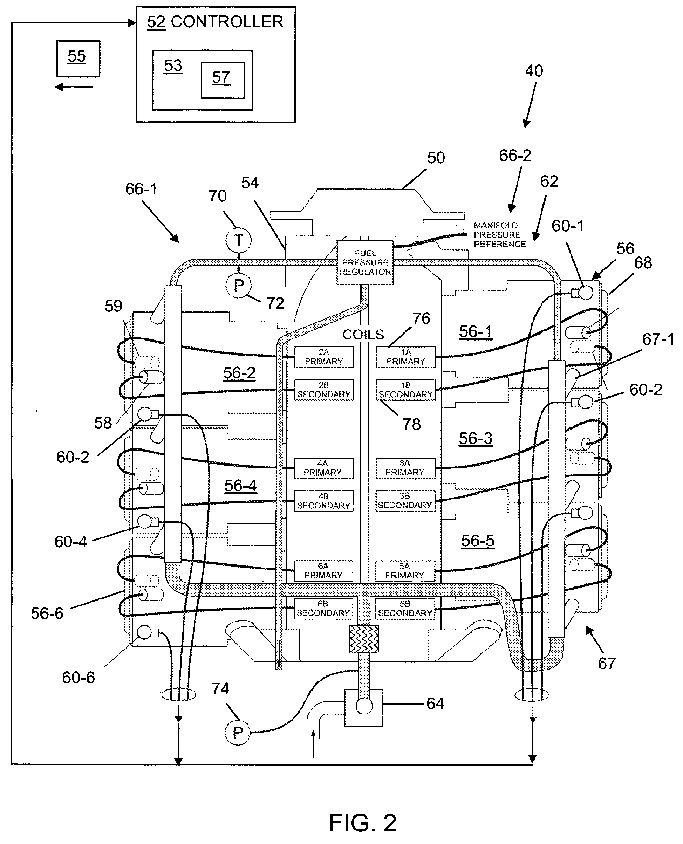

Fig. 2 illustrates an arrangement of an aircraft engine control system 40 having an aircraft engine 50 and an engine controller 52. The aircraft engine 50 includes a crankcase housing 54 that contains a crankshaft (not shown) and that carries cylinder assemblies 56. As illustrated, the aircraft engine 50 includes cylinder assemblies 56-1 through 56-6. Each cylinder assembly 56 includes a connecting rod (not shown) that connects the crankshaft to a piston (not shown) disposed within corresponding cylinder housings 68 of each cylinder assembly 56. Each cylinder assembly 56 also carries primary and secondary spark plugs 58, 59. The spark plugs 58, 59 are configured to ignite a fuel and air mixture contained within the cylinder assembly 56 during operation. The secondary spark plug 59 operates as a back-up to the primary spark plug 58 such that, in the event of failure of a primary spark plug 58 for a cylinder assembly 56, the secondary spark plug 59 provides ignition of the fuel and air mixture within the cylinder assembly 56.

Each cylinder assembly 56 also includes a knock detection sensor. For example, as illustrated in Fig. 1, each cylinder assembly 56-1 through 56-6 carries a corresponding knock detection sensor 60-1 through 60-6. Each knock detection sensor 60-1 through 60-6 is configured to detect induced vibrations, such as resulting from detonation, within its corresponding cylinder assembly 56-1 through 56-6. Each of the knock detection sensors 60-1 through 60-6 also provides signals corresponding to the vibrations detected in their corresponding cylinder assembly, to the engine controller 52. While each of the knock detection sensors 60-1 through 60-6 can be configured in a variety of ways, in one arrangement, the knock detection sensors 60-1 through 60-6 are configured as accelerometers. In another arrangement, the knock detection sensors 60-1 through 60-6 are configured as piezoelectric transducers.

The aircraft engine 50 also includes a fuel delivery system 62 having a fuel pump 64, fuel rails 66-1, 66-2, and fuel injectors 67 configured to provide fuel from a fuel source to each of the cylinder assemblies 56. In use, each cylinder assembly 56 receives fuel via the fuel delivery system 62. The primary spark plug 58 ignites a fuel air mixture contained within each cylinder assembly housing 68 thereby causing the piston and connecting rod disposed within each cylinder assembly housing 68 to reciprocate therein. The reciprocating motion of the piston and connecting rod rotates the crankshaft which, in turn, rotates other components associated with the aircraft engine 50.

The engine controller 52 is configured to control the performance of the aircraft engine 50 during operation. The engine controller 52 electrically couples to a variety of sensors associated with the aircraft engine 50, such as the knock detection sensors 60-1 through 60-6, a fuel temperature sensor 70, a fuel pressure sensor 72, a fuel pump pressure sensor 74, and other sensors that measure various environmental and engine conditions such as ambient air temperature and air density. The engine controller 52 also includes a control processor or electronic engine control unit (ECU) 53, which receives various input signals from the sensors and calculates engine operating parameters based upon the data signals. Based upon the engine operating parameters, the control processor 53 adjusts the various aircraft engine-operating parameters to optimize the performance of the aircraft engine 50. While the engine controller 52 can be configured in a variety of ways, in one arrangement the engine controller 52 is configured as a Full Authority Digital Engine Controller (FADEC).

The engine controller 52 is configured to receive input signals from all of the knock detection sensors 60-1 through 60-6 in a substantially continuous manner. Each one of the input signals correspond to detected vibrations in each one of the corresponding cylinder assemblies 56-1 through 56-6. The engine controller 52 is also configured with a signal threshold value 57. In use, when the engine controller 52 compares the voltage value of the input signal to the signal threshold value, the engine controller 52 can distinguish actual knocking in the cylinder assembly 56-1 from other noise or vibrations induced in the cylinder assembly 56-1. In one arrangement, the signal threshold value 57 is preconfigured as a voltage value indicative of a knocking event occurring in a particular cylinder assembly 56-1 through 56-6. For example, assume that knocking within the cylinder assembly 56-1 causes the corresponding knock detection sensor 60-1 to generate a signal having an associated voltage value greater than 1 V. Accordingly, to detect the presence of knocking, the engine controller 52 is configured with a signal threshold value of 1 V. With such a configuration, when the engine controller 52 compares a voltage value of the input signal to the signal threshold value, the engine controller 52 can distinguish actual knocking in the cylinder assembly 56-1 from other noise or vibrations induced in the cylinder assembly 56-1.

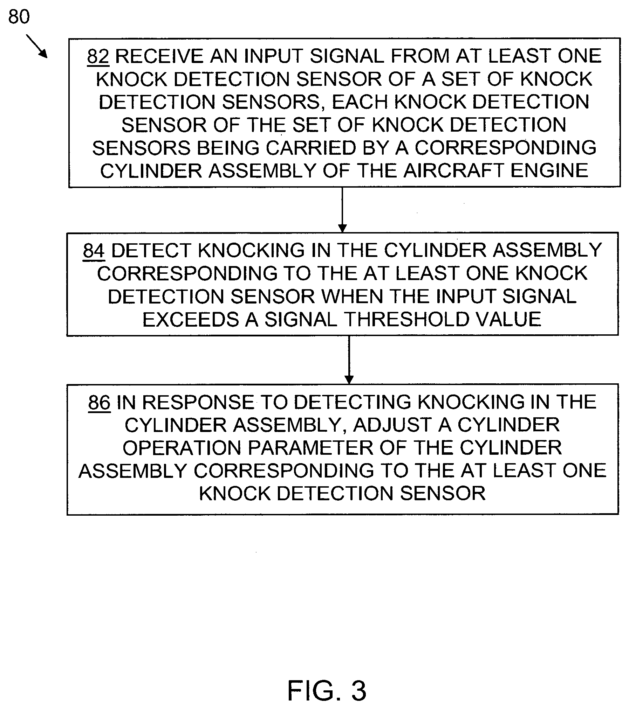

Based upon the relation between the input signals and the signal threshold value 57, the engine controller 52 can adjust certain operation parameters associated with a corresponding cylinder assembly 56 from which the vibration signals originate to minimize or suppress knocking and detonation from occurring in that particular cylinder assembly 56. Fig. 3 illustrates a flowchart 80 of a procedure performed by the engine controller 52 to suppress knocking in a cylinder assembly 56 of the aircraft engine 50.

In step 82, the engine controller 52 receives an input signal from at least one knock detection sensor of a set of knock detection sensors 60, each knock detection sensor of the set of knock detection sensors 60 being carried by a corresponding cylinder assembly 56 of the aircraft engine 50. For example, with reference to cylinder assembly 56-1 of Fig. 2, when the knock detection sensor 60-1 receives an input vibration from the corresponding cylinder assembly 56-1, the knock detection sensor 60-1 generates a signal having a particular voltage and transmits the signal to the engine controller 52. The engine controller 52 receives the signal from the knock detection sensor 60-1 and identifies the cylinder assembly 56-1 as being associated with the input signal received from the knock detection sensor 60-1. For example, based upon the physical connection between the knock detection sensor 60-1 and the control processor 53, the engine controller 52 identifies signals arriving at the control processor 53 from the knock detection sensor 60-1 as originating from cylinder assembly 56-1.

In step 86, the engine controller 52 detects knocking in the cylinder assembly 56-1 corresponding to the at least one knock detection sensor 60-1 when the input signal exceeds a signal threshold value 57. In one case, assume that the engine controller 52 is configured with a signal threshold 57 value of at least 1 V. Further assume that when detonation occurs within the cylinder assembly 56-1, the knock detection sensor 60-1 generates a signal having a voltage value of 1.5 V. When the engine controller 52 receives the signal as the input signal, the engine controller 52 compares the voltage value of the input signal with the signal threshold value 57. As a result of the comparison, the engine controller 52 detects that the voltage value of the input signal from the knock detection sensor 60-1 exceeds the signal threshold value 57 and that detonation has occurred in the cylinder assembly 56-1.

In step 88, in response to detecting knocking, the engine controller 52 adjusts cylinder assembly operating parameters of the cylinder assembly 56 corresponding to the at least one knock detection sensor 60. For example, after the engine controller 52 has detected knocking in the cylinder assembly 56-1 based upon the signal received from the knock detection sensor 60-1, the engine controller 52 transmits one or more control signals 55 to various components of the engine 50 to control operation of the component and suppress or eliminate knocking in the cylinder assembly 56-1. In one arrangement, as indicated in Fig. 2, the engine controller 52 transmits a control signal 55 to one or both of a primary and secondary spark plug controller 76, 78 in order to reduce the spark timing of a corresponding primary or secondary spark plug 58, 59. Reducing the spark timing optimally causes one or both of the spark plugs 58, 59 to fire at a retarded timing value relative its normal operating timing value. Also as indicated in Fig. 2, in one arrangement, the engine controller 52 transmits a control signal 55 to the fuel pump 64 to cause the fuel pump 64 to enrich the fuel or increase a volume of fuel provided to the cylinder assembly 56-1. Increasing the fuel volume provided by the fuel pump 64 to the cylinder assembly 56-1 reduces the ratio of air to fuel as received by the cylinder assembly 56-1 via the fuel injector 67-1. This fuel enrichment suppresses knocking in the cylinder assembly 56-1. In one arrangement, the engine controller 52 transmits control signals 55 to both the spark plugs 58, 59 and the fuel injector to control both the spark timing and the fuel enrichment of the cylinder assembly 56-1 to suppress knocking in the cylinder assembly 56-1.

Because each cylinder assembly 56-1 through 56-6 includes its own knock detection sensor 60-1 through 60-6, the engine controller 52 can directly detect and identify knocking as occurring from a particular cylinder assembly 56-1 through 56-6. Accordingly, the use of an individual knock detection sensor 60-1 through 60-6 with each cylinder assembly 56-1 through 56-6 minimizes erroneous detection of knocking in otherwise normally operating cylinder assemblies. Additionally, use of the engine controller 52 in conjunction with the knock detection sensors 60-1 through 60-6 provides automatic control of certain cylinder assembly operation parameters, such a spark timing and/or fuel enrichment, to suppress knocking in the cylinder assembly 56.

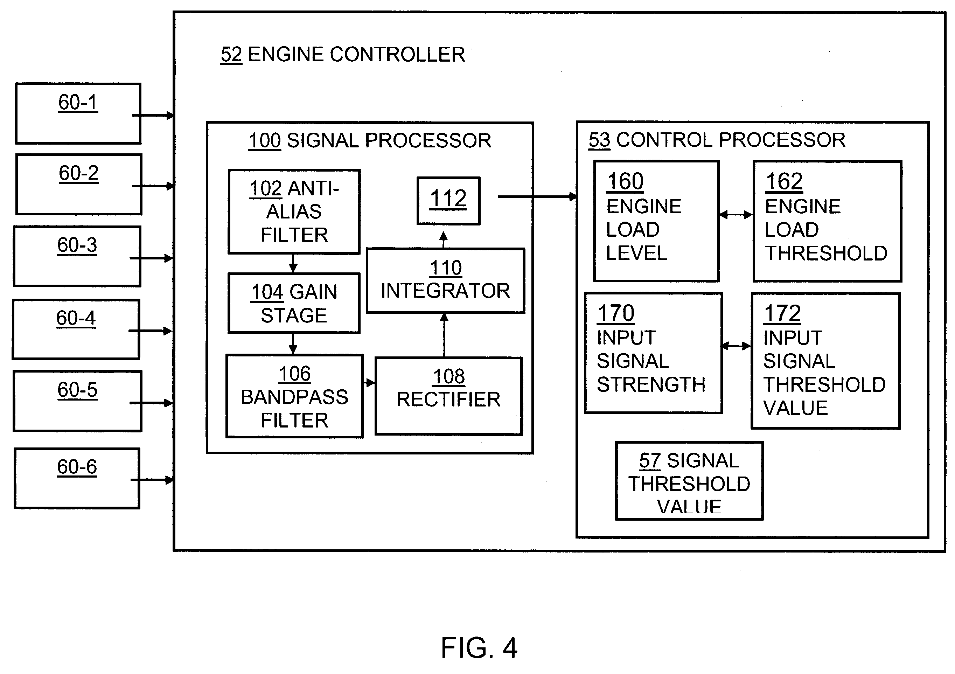

In one arrangement, the engine controller 52 is configured to provide signal processing to the input signals received from the knock detection sensors 60-1 through 60-6 in order to filter certain signals from further processing. This allows the engine controller 52 to distinguish signals generated by any one of the knock detection sensors 60-1 through 60-6 in response to detonation within a corresponding cylinder assembly 56-1 through 56-6 from background noise signals generated by any one of the knock detection sensors 60-1 through 60-6 in response to non-detonation vibrations induced in any of the corresponding cylinder assemblies 56-1 through 56-6. Fig. 4 illustrates an arrangement of the engine controller 52 having such a configuration.

As shown in Fig. 4, the engine controller 52 includes a signal processor 100 having several stages used to process or filter the input signals received from the knock detection sensors 60. For example, the signal processor 100 includes an anti-aliasing filter stage 102 that samples of the signals generated by each of the knock detection sensors 60. In order to ensure that the engine controller 52 does not erroneously drop or miss a signal transmitted from the knock detection sensors 60, the anti-aliasing filter stage 100 provides an oversampling of the signals from each of the sensors 60 at a rate faster than detonation can occur within the corresponding cylinder assemblies 56. The anti-aliasing filter stage 100 provides the input signals to a gain stage 104 which increase the amplitude of the signals received from the knock detection sensors 60. The gain stage 104 provides the amplified input signals to a bandpass filter stage 104. Typically, detonation in a cylinder assembly 56 causes the cylinder assembly to resonate at a particular frequency. The bandpass filter stage 104 is calibrated such that, for input signals having a frequency falling outside a resonant frequency range of the cylinder assemblies 56 during detonation, the bandpass filter stage 104 attenuates these input signals. The bandpass filter stage 104 passes non-attenuated input signals to a rectifier stage 108 which is configured to bias to a positive-only signal.

The rectifier stage 108 passes the rectified input signals to an integrator stage 110. The integrator stage 110 distinguishes the rectified input signals as occurring either within or outside of a knock detection window where detonation typically occurs. For example, with reference to Fig. 1C, detonation and knocking typically occurs in a cylinder assembly 10 when the spark plug ignites a fuel and air mixture contained in the cylinder assembly 10 when the crankshaft (not shown) positions the piston 14 from the top dead center position, such as illustrated in Fig. 1B, to a position of about 90 degrees (i.e., halfway) from the top dead center position, such as indicated in Fig. 1C. Accordingly, with reference to Fig. 4, the integrator stage 110 is configured to transmit the input signal on to the control processor 53 as a knocking signal 112, indicative of knocking in a particular cylinder assembly 56-1 through 56-6, when a corresponding knock detection sensor 60-1 through 60-6 generates the input signal within the knock detection window. The integrator stage 110 is further configured to filter or attenuate the input signal when a knock detection sensor 60-1 through 60-6 generates the input signal outside of the knock detection window. For example, a knock detection sensor 60-1 through 60-6 can generate an input signal that falls outside of the knock detection window when the piston translates between about the halfway position within a corresponding cylinder assembly 56-1 through 56-6 to about a bottom dead center position within the cylinder assembly. Additionally, a knock detection sensor 60-1 through 60-6 can generate an input signal that falls outside of the knock detection window when the piston translates between about the bottom dead center position within a corresponding cylinder assembly 56-1 through 56-6 to about a top dead center position within the cylinder assembly. By filtering input signals that fall outside of the knock detection window, the integrator stage 110 allows the engine controller 52 to more accurately detect knocking in a cylinder assembly 56 and to minimize erroneous categorization of cylinder assembly vibration as knocking.

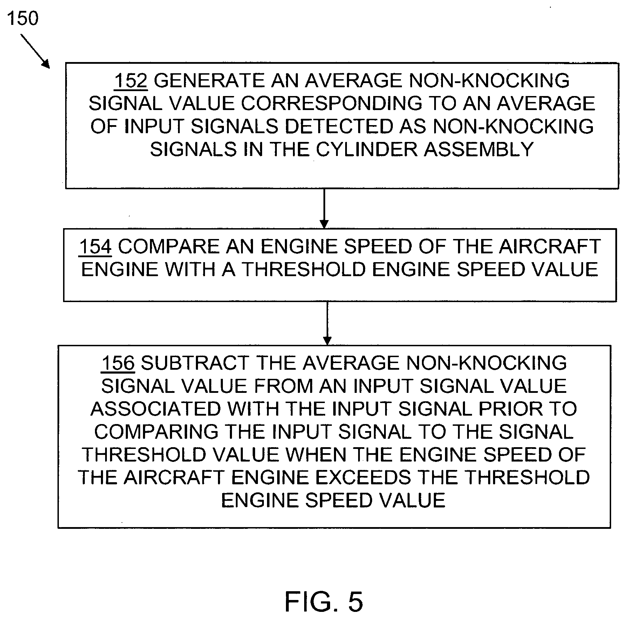

During operation, the engine 50 generates noise. With reference to Fig. 2, as the operating speed, as measured in revolutions per minute (RPM), of the engine increases the amount of noise generated by the engine 50 increases as well. The knock detection sensors 60-1 through 60-6 can detect the increase in noise in corresponding cylinder assemblies 56-1 through 56-6 and, as a result, can generate signals having relatively large voltage values, even in the absence of detonation occurring in the cylinder assemblies 56-1 through 56-6. For example, in the case where the engine 50 operates at a relatively high engine speed, the knock detection sensors 60-1 through 60-6 can pick up the increased noise generated by the engine 50 and transmit signals having voltage values in excess of the threshold voltage value 57 to the engine controller 52. Accordingly, the engine controller 52 can erroneously detect these background noise signals as being associated with knocking in the cylinder assemblies 56. In order to compensate for an increase in background noise, such as caused by an increase in the operating speed for the engine 50, in one arrangement, the engine controller 52 is configured to adjust the voltage values for input signals received from the knock detection sensors 60. Fig. 5 illustrates a flowchart 150 of a procedure performed by the engine controller 52 to adjust the voltage values for input signals received from the knock detection sensors 60-1 through 60-6.

In step 152, the engine controller 52 generates an average non-knocking signal value corresponding to an average of the input signals detected as non-knocking signals in the cylinder assembly 56. For example, as indicated above, the signal processor 100 of the engine controller 52 receives input signals from the knock detection sensors 60-1 through 60-6. For each knock detection sensor 60-1 through 60-6, the signal processor 100 distinguishes the input signals as being associated with either knocking in one or more of the corresponding cylinder assemblies 56-1 through 56-6 or as relating to a non-knocking event. In the case where the engine controller 52 detects the input signals of a particular knock detection sensor 60-1 through 60-6 as being associated with a non-knocking event, on a per cylinder assembly basis, the engine controller 52, averages the voltage values associated with these non-knock events to generate the average non-knock event value. For example, with respect to Fig. 2, for the six cylinder assemblies 56-1 through 56-6, in the case where the engine controller 52 receives non-knock event input signals from the six knock detection sensors 60-1 through 60-6, the engine controller 52 generates six average non-knock event values, one corresponding to each cylinder assembly 56-1 through 56-6.

In step 154, the engine controller 52 compares an engine speed of the aircraft engine 50 with a threshold engine speed value. In one arrangement, the threshold engine speed value is configured as the operating speed of the engine 50 where the noise generated by the engine 50 substantially increases the voltage values of the input signals generated by the knock detection sensors 60-1 through 60-6. As indicated above, in the case where the engine 50 operates at a relatively high engine speed, the knock detection sensors 60-1 through 60-6 can pick up the increased noise generated by the engine 50. By comparing the engine speed of the aircraft, such as detected by an engine operating speed sensor, with the threshold engine speed value, the engine controller 52 can detect the point at which the background noise created by operation of the engine 50 begins to affect (i.e., improperly increase the voltage values of) the input signals.

In step 156, the engine controller 52 subtracts the average non-knocking signal value from an input signal value associated with the input signal prior to comparing the input signal to the signal threshold value when the engine speed of the aircraft engine 50 exceeds threshold engine speed value. For example, assume the threshold engine speed value is configured with a value of 3600 RPM. Further assume that the engine controller 52 detects, such as through the use of an engine speed detection sensor, that the engine 50 runs at 4000 RPM. In this case, as a result of a comparison between the threshold engine speed and the detected operational engine speed, the engine controller 52 detects the operational engine speed as exceeding the threshold engine speed value. To minimize the effect of the background noise on each of the knock detection sensors' 60-1 through 60-6 input signals, the engine controller 52 subtracts the average non-knocking signal value associated with a particular cylinder assembly 56-1 through 56-6 from the input signal received from the knock detection sensors 60-1 through 60-6 of that particular cylinder assembly 56-1 through 56-6. The engine controller 52 then processes the background noise normalized signals to detect the presence of knocking in any of the cylinder assemblies 56-1 through 56-6. Accordingly, the engine controller 52 compensates for an increase in background noise, as caused by an increase in the operating speed for the engine 50, to minimize erroneous detection of knocking in the cylinder assemblies 56-1 through 56-6.

As indicated above, the engine controller 52 receives and processes signals from a variety of sensors associated with the aircraft engine 50. When the engine controller 52 processes signals from these sensors simultaneously, such processing slows the overall processing speed of the control processor 53 of the engine controller 52. In order to minimize a load placed on the control processor 53 when processing input signals received from the knock detection sensors 60-1 through 60-6, the engine controller 52 is configured to allow processing the input signals only after certain engine operating conditions have been met. For example, knocking of the cylinder assemblies 56 typically occurs as the engine's operating speed and operating temperature increase above certain levels. Accordingly, in order to best utilize the resources of the control processor 53, the engine controller 52 allows processing of input signals received from the knock detection sensors 60-1 through 60-6 once the engine's operating speed and operating temperature has increased above these levels.

For example, with reference to Fig. 4, during operation of the engine 50 and prior to processing of the input signals from the knock detection sensors 60-1 through 60-6, the engine controller 52 receives signals relating to the engine speed of the engine 50, an estimated intake temperature of each cylinder assembly 56-1 through 56-6, and an average temperature for the cylinder assemblies 56-1 through 56-6. Based upon these signals, the engine controller 52 generates an engine load level value 160 indicative of engine's operating speed and operating temperature. The engine controller 52 then compares the engine load level value 160 to a preconfigured engine load threshold 162. In one arrangement, the engine load threshold is indicative of the minimal load placed on the aircraft engine 50 that will result in knocking in one or more of the cylinder assemblies 56-1 through 56-6.

As a result of the comparison, in the case where the engine load level value 160 falls below the engine load threshold 162, the engine controller 52 maintains the signal processor 100 in an off mode of operation such that the signal processor 100 does not process input signals from the knock detection sensors 60. The engine controller 52, however, continues to receive signals relating to the engine speed of the engine 50, the estimated intake temperature of each cylinder assembly 56, and the average temperature for the cylinder assemblies 56-1 through 56-6 and continues to generate updated engine load level values 160. In the case where the engine load level exceeds the engine load threshold, the engine controller 52 activates the signal processor 100 such that the signal processor 100 and the control processor 53 process input signals from the knock detection sensors 60-1 through 60-6. Accordingly, by activating the signal processor 100 under such conditions, the engine controller 52 can more accurately detect knocking in a particular cylinder assembly 56 and can minimize erroneous categorization of cylinder assembly vibration as knocking.

While various embodiments of the invention have been particularly shown and described, it will be understood by those skilled in the art that various changes in form and details may be made therein without departing from the spirit and scope of the invention as defined by the appended claims.

Fig. 2 illustrates the aircraft engine 50 as having six cylinder assemblies 56-1 through 56-6 with each cylinder assembly 56-1 through 56-6 having a corresponding knock detection sensor 60-1 through 60-6. Such illustration is by way of example only. In one arrangement, the aircraft engine can include any number of cylinder assemblies and corresponding knock detection sensors.

As indicated above with respect to Fig. 2, to suppress knocking in a particular cylinder assembly 56, the engine controller 52 transmits control signals 55 to the spark plugs and the fuel injectors to reduce the spark timing and to increase the volume of fuel delivered to a cylinder assembly 56-1 through 56-6, respectively. In one arrangement, the amount of the reduction of the spark timing and the increase in the volume of fuel delivered to a cylinder assembly 56-1 through 56-6 is based upon a strength of the input signal received from corresponding knock detection sensors 60-1 through 60-6 relative to a preconfigured signal threshold value.

During operation of the engine 50, the intensity of detonation within a cylinder assembly 56-1 through 56-6 can affect the voltage value of the signal generated by the corresponding knock detection sensor 60. For example, moderate detonations within any cylinder assembly 56-1 through 56-6 can cause the corresponding knock detection sensor 60-1 through 60-6 to generate a signal having a moderate voltage value, such as a value of 1.5 V. Relatively stronger detonations within any cylinder assembly 56-1 through 56-6 can cause the corresponding knock detection sensor 60-1 through 60-6 to generate a signal having a relatively larger voltage value, such as a voltage value of 4 V.

In order to properly compensate for weaker or stronger detonations occurring in a cylinder assembly 56-1 through 56-6, when the engine controller 52 receives an input signal from a knock detection sensor 60-1 through 60-6, the engine controller 52 characterizes a signal strength of the input signal relative to the signal threshold value prior to adjusting a cylinder operation parameter of the corresponding cylinder assembly 56-1 through 56-6. For example, assume the engine controller 52 receives an input signal from a knock detection sensor 60-1 through 60-6 where the input signal has a voltage value of 1.5 V, indicative of moderate knocking in the corresponding cylinder assembly 56-1 through 56-6. The engine controller 52 characterizes the strength of the input signal, for example, by subtracting the signal threshold value 57 of 1.0 V from this input signal voltage value. Based upon the relatively small difference between the two values, the engine controller 52 adjusts one or both of the spark timing and the increase in the volume of fuel delivered to the cylinder assembly 56-1 through 56-6 by a relatively moderate amount. For example, the engine controller 52 can reduce the spark timing of a particular cylinder assembly 56-1 through 56-6 by 5°.

However, assume the case where the engine controller 52 receives an input signal from a knock detection sensor 60-1 through 60-6 where the input signal has a voltage value of 4 V. The engine controller 52 characterizes the strength of the input signal, for example, by subtracting the signal threshold value 57 of 1.0 V from this input signal voltage value. Based upon the relatively large difference between the two values, the engine controller 52 adjusts one or both of the spark timing and the increase in the volume of fuel delivered to the cylinder assembly 56-1 through 56-6 by relatively substantial amount. For example, the engine controller 52 can reduce the spark timing of a particular cylinder assembly 56-1 through 56-6 by 15°. With such a configuration, the engine controller 52 compensate for weaker or stronger detonations occurring in a cylinder assembly 56-1 through 56-6.

As indicated above, in response to detecting knocking in a particular cylinder assembly 56, the engine controller 52 adjusts one or more cylinder assembly operation parameters for that cylinder assembly 56. Such adjustment can occur after detection of a single knock event in the cylinder assembly. However, in one arrangement, the engine controller 52 adjusts the cylinder assembly operation parameter for a particular cylinder assembly 56 after detecting an occurrence of a number of knock events in that particular cylinder assembly 56 over a given period of TDC events.

## Claims

1. A method for suppressing knocking in a cylinder assembly of an aircraft engine by an aircraft engine controller, comprising:
receiving an input signal from at least one knock detection sensor of a set of knock detection sensors, each knock detection sensor of the set of knock detection sensors being carried by a corresponding cylinder assembly of the aircraft engine;
detecting knocking in the cylinder assembly corresponding to the at least one knock detection sensor when the input signal exceeds a signal threshold value;
in response to detecting the knocking in the cylinder assembly, adjusting a cylinder operation parameter of the cylinder assembly corresponding to the at least one knock detection sensor;
generating an average non-knocking signal value corresponding to an average of the input signals received and detected as non-knocking signals in the cylinder assembly;
comparing an engine speed of the aircraft engine with a threshold engine speed value; and
subtracting the average non-knocking signal value from an input signal value associated with the input signal prior to comparing the input signal to the signal threshold value when the engine speed of the aircraft engine exceeds the threshold engine speed value;
wherein receiving the input signal from at least one knock detection sensor of a set of knock detection sensors comprises:
generating a knock signal corresponding to the input signal when the input signal is received from the at least one knock detection sensor as the piston translates from about a top dead center position within the cylinder assembly to about a halfway position within the cylinder assembly;
filtering the input signal when the input signal is received from the at least one knock detection sensor as the piston translates between about the halfway position within the cylinder assembly to about a bottom dead center position within the cylinder assembly and as the piston translates between about the bottom dead center position within the cylinder assembly to about a top dead center position within the cylinder assembly; and
detecting knocking in the cylinder assembly comprises detecting knocking in the cylinder assembly corresponding to the at least one knock detection sensor when the knock signal exceeds the signal threshold value.

2. The method of claim 1, wherein adjusting the cylinder operation parameter of the cylinder assembly corresponding to the at least one knock detection sensor comprises reducing a spark timing of a spark plug carried by the cylinder assembly.

3. The method of claim 2, further comprising characterizing a signal strength of the input signal relative to the signal threshold value; and
wherein reducing the spark timing of the spark plug carried by the cylinder assembly comprises (i) reducing the spark timing of the spark plug carried by the cylinder assembly by a first amount in response to characterizing the input signal as having a first strength relative to the signal threshold value and (ii) reducing the spark timing of the spark plug carried by the cylinder assembly by a second amount in response to characterizing the input signal as having a second strength relative to the signal threshold value, the first signal strength being less than the second signal strength and the first amount of spark timing reduction being less than the second amount of spark timing reduction.

4. The method of claim 1, wherein adjusting the cylinder operation parameter of the cylinder assembly corresponding to the at least one knock detection sensor comprises increasing a volume of fuel provided to the cylinder assembly by a fuel pump.

5. The method of claim 4, further comprising characterizing a signal strength of the input signal relative to the signal threshold value; and
wherein increasing the volume of fuel provided to the cylinder assembly by the fuel pump comprises (i) increasing the volume of fuel provided to the cylinder assembly by the fuel pump by a first amount in response to characterizing the input signal as having a first strength relative to the signal threshold value and (ii) increasing the volume of fuel provided to the cylinder assembly by the fuel pump by a second amount in response to characterizing the input signal as having a second strength relative to the signal threshold value, the first signal strength being less than the second signal strength and the first amount of fuel volume increase being less than the second amount of fuel volume increase.

6. The method of claim 1, comprising:
comparing an engine load level with an engine load threshold, the engine load level based upon an engine speed of the aircraft engine, an estimated cylinder assembly intake temperature, and an average cylinder assembly temperature for the cylinder assemblies of the aircraft engine; and
wherein receiving the input signal from the at least one knock detection sensor comprises receiving the input signal from the at least one knock detection sensor when the engine load level exceeds the engine load threshold.

7. An aircraft engine controller, the aircraft engine controller being configured to:
receive an input signal from at least one knock detection sensor of a set of knock detection sensors, each knock detection sensor of the set of knock detection sensors being carried by a corresponding cylinder assembly of the aircraft engine;
detect knocking in the cylinder assembly corresponding to the at least one knock detection sensor when the input signal exceeds a signal threshold value;
in response to detecting knocking in the cylinder assembly, adjust a cylinder operation parameter of the cylinder assembly corresponding to the at least one knock detection sensor;
generate an average non-knocking signal value corresponding to an average of the input signals received and detected as non-knocking signals in the cylinder assembly;
compare an engine speed of the aircraft engine with a threshold engine speed value; and
subtract the average non-knocking signal value from an input signal value associated with the input signal prior to comparing the input signal to the signal threshold value when the engine speed of the aircraft engine exceeds the threshold engine speed value;
wherein the aircraft engine controller configured to receive the input signal from at least one knock detection sensor of a set of knock detection sensors is further configured to:
generate a knock signal corresponding to the input signal when the input signal is received from the at least one knock detection sensor as the piston translates from about a top dead center position within the cylinder assembly to about a halfway position within the cylinder assembly;
filter the input signal when the input signal is received from the at least one knock detection sensor as the piston translates between about the halfway position within the cylinder assembly to about a bottom dead center position within the cylinder assembly and as the piston translates between about the bottom dead center position within the cylinder assembly to about a top dead center position within the cylinder assembly; and
detect knocking in the cylinder assembly comprises detecting knocking in the cylinder assembly corresponding to the at least one knock detection sensor when the knock signal exceeds the signal threshold value.

8. The aircraft engine controller of claim 7, wherein the aircraft engine controller is configured to, when adjusting the cylinder operation parameter of the cylinder assembly corresponding to the at least one knock detection sensor, reduce a spark timing of a spark plug carried by the cylinder assembly.

9. The aircraft engine controller of claim 8, wherein the aircraft engine controller is configured to characterize a signal strength of the input signal relative to the signal threshold value; and
when reducing the spark timing of the spark plug carried by the cylinder assembly, (i) reduce the spark timing of the spark plug carried by the cylinder assembly by a first amount in response to characterizing the input signal as having a first strength relative to The signal threshold value and (ii) reduce the spark triming of the spark plug carried by the cylinder assembly by a second amount in response to characterizing the input signal as having a second strength relative to the signal threshold value, the first signal strength being less than the second signal strength and the first amount of spark timing reduction being less than the second amount of spark timing reduction.

10. The aircraft engine controller of claim 7, wherein the aircraft engine controller is configured to, when adjusting the cylinder operation parameter of the cylinder assembly corresponding to the at least one knock detection sensor, increase a volume of fuel provided to the cylinder assembly by a fuel pump.

11. The aircraft engine controller of claim 10, wherein the aircraft engine controller is configured to characterize a signal strength of the input signal relative to the signal threshold value; and
when increasing the volume of fuel provided to the cylinder assembly by the fuel pump (i) increase the volume of fuel provided to the cylinder assembly by the fuel pump by a first amount in response to characterizing the input signal as having a first strength relative to the signal threshold value and (ii) increase the volume of fuel provided To the cylinder assembly by the fuel pump by a second amount in response to characterizing the input signal as having a second strength relative to the signal threshold value, the first signal strength being less than the second signal strength and the first amount of fuel volume increase being less than the second amount of fuel volume increase.

12. The aircraft engine controller of claim 7, wherein the aircraft engine controller is configured to:
compare an engine load level with an engine load threshold, the engine load level based upon an engine speed of the aircraft engine, an estimated cylinder assembly intake temperature, and an average cylinder assembly temperature for the cylinder assemblies of the aircraft engine; and
when receiving the input signal from the at least one knock detection sensor, receive the input signal from the at least one knock detection sensor when the engine load level exceeds the engine load threshold.

## Patentansprüche

1. Verfahren zum Unterdrücken von Motorklopfen in einer Zylinderanordnung eines Flugzeugtriebwerks durch eine Flugzeugtriebwerksteuerung, umfassend:
Empfangen eines Eingabesignals von wenigstens einem Klopferkennungssensor eines Satzes an Klopferkennungssensoren, wobei jeder Klopferkennungssensor des Satzes an Klopferkennungssensoren durch eine entsprechende Zylinderanordnung des Flugzeugtriebwerks getragen wird;
Erkennen von Motorklopfen in der Zylinderanordnung, die dem wenigstens einen Klopferkennungssensor entspricht, wenn das Eingabesignal einen Signalgrenzwert überschreitet;
in Reaktion auf das Erkennen des Motorklopfens in der Zylinderanordnung, Anpassen eines Zylinderbetriebsparameters der Zylinderanordnung, die dem wenigstens einen Klopferkennungssensor entspricht;
Erzeugen eines durchschnittlichen nicht klopfenden Signalwerts, der einem Durchschnitt des Eingabesignals entspricht, das als nicht klopfende Signale in der Zylinderanordnung empfangen und erkannt wird;
Vergleichen einer Drehzahl des Flugzeugtriebwerks mit einem Drehzahlgrenzwert; und
Subtrahieren des durchschnittlichen nicht klopfenden Signalwerts von einem Eingabesignalwert, der mit dem Eingabesignal verknüpft ist, vor dem Vergleichen des Eingabesignals mit dem Signalgrenzwert, wenn die Drehzahl des Flugzeugtriebwerks den Drehzahlgrenzwert überschreitet;
wobei das Empfangen des Eingabesignals von wenigstens einem Klopferkennungssensor eines Satzes an Klopferkennungssensoren Folgendes umfasst:
Erzeugen eines Klopfsignals, das dem Eingabesignal entspricht, wenn das Eingabesignal vom wenigstens einen Klopferkennungssensor empfangen wird, wenn sich der Kolben ungefähr von einer oberen Totpunktposition in der Zylinderanordnung zu einer Position ungefähr auf der Hälfte in der Zylinderanordnung verschiebt;
Filtern des Eingabesignals, wenn das Eingabesignal von dem wenigstens einen Klopferkennungssensor empfangen wird, wenn sich der Kolben von der Position ungefähr auf der Hälfte in der Zylinderanordnung ungefähr zu einer unteren Totpunktposition in der Zylinderanordnung verschiebt und wenn sich der Kolben ungefähr von der unteren Totpunktposition in der Zylinderanordnung ungefähr zu einer oberen Totpunktposition in der Zylinderanordnung verschiebt; und
wobei das Erkennen von Motorklopfen in der Zylinderanordnung das Erkennen von Motorklopfen in der Zylinderanordnung, die dem wenigstens einen Klopferkennungssensor entspricht, wenn das Klopfsignal den Signalgrenzwert überschreitet, umfasst.

2. Verfahren nach Anspruch 1, wobei das Anpassen des Zylinderbetriebsparameters der Zylinderanordnung, die dem wenigstens einen Klopferkennungssensor entspricht, das Verringern von Zündzeiten einer Zündkerze der Zylinderanordnung umfasst.

3. Verfahren nach Anspruch 2, weiterhin umfassend das Charakterisieren einer Signalstärke des Eingabesignals im Verhältnis zum Signalgrenzwert; und
wobei das Verringern der Zündzeiten der Zündkerze der Zylinderanordnung (i) das Verringern der Zündzeiten der Zündkerze der Zylinderanordnung um einen ersten Betrag in Reaktion auf das Charakterisieren des Eingabesignals als eine erste Stärke im Verhältnis zum Signalgrenzwert aufweisend und (ii) das Verringern der Zündzeiten der Zündkerze der Zylinderanordnung um einen zweiten Betrag in Reaktion auf das Charakterisieren des Eingabesignals als eine zweite Stärke im Verhältnis zum Signalgrenzwert aufweisend umfasst, wobei die erste Signalstärke geringer ist als die zweite Signalstärke und der erste Betrag der Zündzeitenverringerung geringer ist als der zweite Betrag der Zündzeitenverringerung.

4. Verfahren nach Anspruch 1, wobei das Anpassen des Zylinderbetriebsparameters der Zylinderanordnung, die dem wenigstens einen Klopferkennungssensor entspricht, das Erhöhen eines Treibstoffvolumens umfasst, das durch eine Treibstoffpumpe der Zylinderanordnung bereitgestellt wird.

5. Verfahren nach Anspruch 4, weiterhin umfassend das Charakterisieren einer Signalstärke des Eingabesignals im Verhältnis zum Signalgrenzwert; und
wobei das Erhöhen des Treibstoffvolumens, das durch die Treibstoffpumpe der Zylinderanordnung bereitgestellt wird, (i) das Erhöhen des Treibstoffvolumens, das durch die Treibstoffpumpe der Zylinderanordnung bereitgestellt wird, in Reaktion auf das Charakterisieren des Eingabesignals als eine erste Stärke im Verhältnis zum Signalgrenzwert aufweisend um einen ersten Betrag und (ii) das Erhöhen des Treibstoffvolumens, das durch die Treibstoffpumpe der Zylinderanordnung bereitgestellt wird, in Reaktion auf das Charakterisieren des Eingabesignals als eine zweite Stärke im Verhältnis zum Signalgrenzwert aufweisend um einen zweiten Betrag umfasst, wobei die erste Signalstärke geringer ist als die zweite Signalstärke und der erste Betrag der Treibstoffvolumenerhöhung geringer ist als der zweite Betrag der Treibstoffvolumenerhöhung.

6. Verfahren nach Anspruch 1, umfassend:
Vergleichen eines Motorlastpegels mit einem Motorlastgrenzwert, wobei der Motorlastpegel auf einer Drehzahl des Flugzeugtriebwerks, einer geschätzten Zylinderanordnungseingangstemperatur und einer durchschnittlichen Zylinderanordnungstemperatur für die Zylinderanordnungen des Flugzeugtriebwerks basiert; und
wobei das Empfangen des Eingabesignals vom wenigstens einen Klopferkennungssensor das Empfangen des Eingabesignals vom wenigstens einen Klopferkennungssensor umfasst, wenn der Motorlastpegel den Motorlastgrenzwert überschreitet.

7. Flugzeugtriebwerksteuerung, wobei die Flugzeugtriebwerksteuerung konfiguriert ist, um:
ein Eingabesignal vom wenigstens einen Klopferkennungssensor eines Satzes an Klopferkennungssensoren zu empfangen, wobei jeder Klopferkennungssensor des Satzes an Klopferkennungssensoren durch eine entsprechende Zylinderanordnung des Flugzeugtriebwerks getragen wird;
Motorklopfen in der Zylinderanordnung, die dem wenigstens einen Klopferkennungssensor entspricht, zu erkennen, wenn das Eingabesignal einen Signalgrenzwert überschreitet;
in Reaktion auf das Erkennen von Motorklopfen in der Zylinderanordnung einen Zylinderbetriebsparameter der Zylinderanordnung, die dem wenigstens einen Klopferkennungssensor entspricht, anzupassen;
einen durchschnittlichen nicht klopfenden Signalwert zu erzeugen, der einem Durchschnitt des Eingabesignals entspricht, das als nicht klopfende Signal in der Zylinderanordnung empfangen und erkannt wird;
eine Drehzahl des Flugzeugtriebwerks mit einem Drehzahlgrenzwert zu vergleichen; und
den durchschnittlichen nicht klopfenden Signalwert von einem Eingabesignalwert, der mit dem Eingabesignal verknüpft ist, vor dem Vergleichen des Eingabesignals mit dem Signalgrenzwert zu subtrahieren, wenn die Drehzahl des Flugzeugtriebwerks den Drehzahlgrenzwert überschreitet;
wobei die Flugzeugtriebwerksteuerung, die konfiguriert ist, um das Eingabesignal vom wenigstens einen Klopferkennungssensor eines Satzes an Klopferkennungssensoren zu empfangen, ferner konfiguriert ist, um:
ein Klopfsignal zu erzeugen, das dem Eingabesignal entspricht, wenn das Eingabesignal vom wenigstens einen Klopferkennungssensor empfangen wird, wenn sich der Kolben ungefähr von einer oberen Totpunktposition in der Zylinderanordnung zu einer Position ungefähr auf der Hälfte in der Zylinderanordnung verschiebt;
das Eingabesignal zu filtern, wenn das Eingabesignal vom wenigstens einen Klopferkennungssensor empfangen wird, wenn sich der Kolben von der Position ungefähr auf der Hälfte in der Zylinderanordnung ungefähr zu einer unteren Totpunktposition in der Zylinderanordnung verschiebt und wenn sich der Kolben ungefähr von der unteren Totpunktposition in der Zylinderanordnung ungefähr zur oberen Totpunktposition in der Zylinderanordnung verschiebt; und
wobei das Erkennen von Motorklopfen in der Zylinderanordnung das Erkennen von Motorklopfen in der Zylinderanordnung, die dem wenigstens einen Klopferkennungssensor entspricht, wenn das Klopfsignal den Signalgrenzwert überschreitet, umfasst.

8. Flugzeugtriebwerksteuerung nach Anspruch 7, wobei die Flugzeugtriebwerksteuerung konfiguriert ist, um, wenn der Zylinderbetriebsparameter der Zylinderanordnung, die dem wenigstens einen Klopferkennungssensor entspricht, angepasst wird, Zündzeiten einer Zündkerze der Zylinderanordnung zu verringern.

9. Flugzeugtriebwerksteuerung nach Anspruch 8, wobei die Flugzeugtriebwerksteuerung konfiguriert ist, um eine Signalstärke des Eingabesignals im Verhältnis zum Signalgrenzwert zu charakterisieren; und
wenn die Zündzeiten der Zündkerze der Zylinderanordnung verringert werden, (i) die Zündzeiten der Zündkerze der Zylinderanordnung in Reaktion auf das Charakterisieren des Eingabesignals als eine erste Stärke im Verhältnis zum Signalgrenzwert aufweisend um einen ersten Betrag zu verringern und (ii) die Zündzeiten der Zündkerze der Zylinderanordnung in Reaktion auf das Charakterisieren des Eingabesignals als eine zweite Stärke im Verhältnis zum Signalgrenzwert aufweisend um einen zweiten Betrag zu verringern, wobei die erste Signalstärke geringer ist als die zweite Signalstärke und der erste Betrag der Zündzeitenverringerung geringer ist als der zweite Betrag der Zündzeitenverringerung.

10. Flugzeugtriebwerksteuerung nach Anspruch 7, wobei die Flugzeugtriebwerksteuerung konfiguriert ist, um, wenn der Zylinderbetriebsparameter der Zylinderanordnung, die dem wenigstens einen Klopferkennungssensor entspricht, angepasst wird, ein Treibstoffvolumen, das durch eine Treibstoffpumpe der Zylinderanordnung bereitgestellt wird, zu erhöhen.

11. Flugzeugtriebwerksteuerung nach Anspruch 10, wobei die Flugzeugtriebwerksteuerung konfiguriert ist, um eine Signalstärke des Eingabesignals im Verhältnis zum Signalgrenzwert zu charakterisieren; und
wenn das Treibstoffvolumen, das durch die Treibstoffpumpe der Zylinderanordnung bereitgestellt wird, angepasst wird, (i) das Treibstoffvolumen, das durch die Treibstoffpumpe der Zylinderanordnung bereitgestellt wird, in Reaktion auf das Charakterisieren des Eingabesignals als eine erste Stärke im Verhältnis zum Signalgrenzwert aufweisend um einen ersten Betrag zu erhöhen und (ii) das Treibstoffvolumen, das durch die Treibstoffpumpe der Zylinderanordnung bereitgestellt wird, in Reaktion auf das Charakterisieren des Eingabesignals als eine zweite Stärke im Verhältnis zum Signalgrenzwert aufweisend um einen zweiten Betrag zu erhöhen, wobei die erste Signalstärke geringer ist als die zweite Signalstärke und der erste Betrag der Treibstoffvolumenerhöhung geringer ist als der zweite Betrag der Treibstoffvolumenerhöhung.

12. Flugzeugtriebwerksteuerung nach Anspruch 7, wobei die Flugzeugtriebwerksteuerung konfiguriert ist, um:
einen Motorlastpegel mit einem Motorlastgrenzwert zu vergleichen, wobei der Motorlastpegel auf einer Drehzahl des Flugzeugtriebwerkes, einer geschätzten Zylinderanordnungseingangstemperatur und einer durchschnittlichen Zylinderanordnungstemperatur für die Zylinderanordnungen des Flugzeugtriebwerks basiert; und
wobei das Empfangen des Eingabesignals vom wenigstens einen Klopferkennungssensor das Empfangen des Eingabesignals vom wenigstens einen Klopferkennungssensor, wenn der Motorlastpegel den Motorlastgrenzwert überschreitet, umfasst.

## Revendications

1. Procédé destiné à supprimer le cognement dans un ensemble cylindre d'un moteur d'avion par un dispositif de commande de moteur d'avion, comprenant :
la réception d'un signal d'entrée en provenance d'au moins un capteur de détection de cognement parmi un ensemble de capteurs de détection de cognement, chaque capteur de détection de cognement de l'ensemble de capteurs de détection de cognement étant supporté par un ensemble cylindre correspondant du moteur d'avion ;
la détection d'un cognement dans l'ensemble cylindre correspondant à l'au moins un capteur de détection de cognement lorsque le signal d'entrée dépasse une valeur seuil de signal ;
en réponse à la détection d'un cognement dans l'ensemble cylindre, le réglage d'un paramètre de fonctionnement de cylindre de l'ensemble cylindre correspondant à l'au moins un capteur de détection de cognement ;
la génération d'une valeur moyenne de signal de non-cognement correspondant à une moyenne des signaux d'entrée reçus et détectés en tant que signaux de non-cognement dans l'ensemble cylindre ;
la comparaison d'une vitesse de moteur du moteur d'avion avec une valeur seuil de vitesse de moteur ; et
la soustraction de la valeur moyenne de signal de non-cognement d'une valeur de signal d'entrée associée au signal d'entrée avant la comparaison du signal d'entrée avec la valeur seuil de signal lorsque la vitesse de moteur du moteur d'avion dépasse la valeur seuil de vitesse de moteur ;
dans lequel la réception du signal d'entrée en provenance d'au moins un capteur de détection de cognement parmi un ensemble de capteurs de détection de cognement comprend :
la génération d'un signal de cognement correspondant au signal d'entrée lorsque le signal d'entrée est reçu depuis l'au moins un capteur de détection de cognement, pendant que le piston se déplace approximativement d'une position de point mort supérieure à l'intérieur de l'ensemble cylindre jusqu'à une position à mi-chemin à l'intérieur de l'ensemble cylindre ;
le filtrage du signal d'entrée lorsque le signal d'entrée est reçu depuis l'au moins un capteur de détection de cognement pendant que le piston se déplace approximativement entre la position à mi-chemin à l'intérieur de l'ensemble cylindre jusqu'à une position de point mort inférieure à l'intérieur de l'ensemble cylindre, et pendant que le piston se déplace approximativement entre la position de point mort inférieure à l'intérieur de l'ensemble cylindre jusqu'à une position de point mort supérieure à l'intérieur de l'ensemble cylindre ; et
la détection d'un cognement dans l'ensemble cylindre comprend la détection d'un cognement dans l'ensemble cylindre correspondant à l'au moins un capteur de détection de cognement lorsque le signal de cognement dépasse la valeur seuil de signal.

2. Procédé selon la revendication 1, dans lequel le réglage du paramètre de fonctionnement du cylindre de l'ensemble cylindre correspondant à l'au moins un capteur de détection de cognement comprend la réduction d'un point d'allumage d'une bougie d'allumage supportée par l'ensemble cylindre.

3. Procédé selon la revendication 2, comprenant en outre la caractérisation d'une intensité de signal du signal d'entrée par rapport à la valeur seuil de signal ; et
dans lequel la réduction du point d'allumage de la bougie d'allumage supportée par l'ensemble cylindre comprend (i) la réduction du point d'allumage de la bougie d'allumage supportée par l'ensemble cylindre d'un premier degré en réponse à la caractérisation du signal d'entrée comme ayant une première intensité de signal par rapport à la valeur seuil de signal, et (ii) la réduction du point d'allumage de la bougie d'allumage supportée par l'ensemble cylindre d'un deuxième degré en réponse à la caractérisation du signal d'entrée comme ayant une deuxième intensité de signal par rapport à la valeur seuil de signal, la première intensité de signal étant inférieure à la deuxième intensité de signal, et le premier degré de réduction du point d'allumage étant inférieur au deuxième degré de réduction du point d'allumage.

4. Procédé selon la revendication 1, dans lequel le réglage du paramètre de fonctionnement du cylindre de l'ensemble cylindre correspondant à l'au moins un capteur de détection de cognement comprend l'augmentation d'un volume de carburant alimenté vers l'ensemble cylindre par une pompe à carburant.

5. Procédé selon la revendication 4, comprenant en outre la caractérisation d'une intensité de signal du signal d'entrée par rapport à la valeur seuil de signal ; et
dans lequel l'augmentation du volume de carburant alimenté vers l'ensemble cylindre par la pompe à carburant comprend (i) l'augmentation du volume de carburant alimenté vers l'ensemble cylindre par la pompe à carburant d'un premier degré en réponse à la caractérisation du signal d'entrée comme ayant une première intensité par rapport à la valeur seuil de signal, et (ii) l'augmentation du volume de carburant alimenté vers l'ensemble cylindre par la pompe à carburant d'un deuxième degré en réponse à la caractérisation du signal d'entrée comme ayant une deuxième intensité par rapport à la valeur seuil de signal, la première intensité de signal étant inférieure à la deuxième intensité de signal, et le premier degré d'augmentation de volume de carburant étant inférieur au deuxième degré d'augmentation de volume de carburant.

6. Procédé selon la revendication 1, comprenant :
la comparaison d'un niveau de charge moteur avec un seuil de charge moteur, le niveau de charge moteur étant basé sur une vitesse de moteur du moteur d'avion, une température d'entrée d'ensemble cylindre estimée, et une température d'ensemble cylindre moyenne pour les ensembles de cylindres du moteur d'avion ; et
dans lequel la réception du signal d'entrée depuis l'au moins un capteur de détection de cognement comprend la réception du signal d'entrée depuis l'au moins un capteur de détection de cognement lorsque le niveau de charge moteur dépasse le seuil de charge moteur.

7. Dispositif de commande de moteur d'avion, le dispositif de commande de moteur d'avion étant configuré pour :
recevoir un signal d'entrée en provenance d'au moins un capteur de détection de cognement parmi un ensemble de capteurs de détection de cognement, chaque capteur de détection de cognement de l'ensemble de capteurs de détection de cognement étant supporté par un ensemble cylindre correspondant du moteur d'avion ;
détecter un cognement dans l'ensemble cylindre correspondant à l'au moins un capteur de détection de cognement lorsque le signal d'entrée dépasse une valeur seuil de signal ;
en réponse à la détection d'un cognement dans l'ensemble cylindre, régler un paramètre de fonctionnement de cylindre de l'ensemble cylindre correspondant à l'au moins un capteur de détection de cognement ;
générer une valeur moyenne de signal de non-cognement correspondant à une moyenne des signaux d'entrée reçus et détectés en tant que signaux de non-cognement dans l'ensemble cylindre ;
comparer une vitesse de moteur du moteur d'avion avec une valeur seuil de vitesse de moteur ; et
soustraire la valeur moyenne de signal de non-cognement d'une valeur de signal d'entrée associée au signal d'entrée avant la comparaison du signal d'entrée avec la valeur seuil de signal lorsque la vitesse de moteur du moteur d'avion dépasse la valeur seuil de vitesse de moteur ;
dans lequel le dispositif de commande de moteur d'avion configuré pour recevoir le signal d'entrée en provenance d'au moins un capteur de détection de cognement parmi un ensemble de capteurs de détection de cognement est en outre configuré pour :
générer un signal de cognement correspondant au signal d'entrée lorsque le signal d'entrée est reçu depuis l'au moins un capteur de détection de cognement, pendant que le piston se déplace approximativement d'une position de point mort supérieure à l'intérieur de l'ensemble cylindre jusqu'à une position à mi-chemin à l'intérieur de l'ensemble cylindre ;
filtrer le signal d'entrée lorsque le signal d'entrée est reçu depuis l'au moins un capteur de détection de cognement pendant que le piston se déplace approximativement entre la position à mi-chemin à l'intérieur de l'ensemble cylindre jusqu'à une position de point mort inférieure à l'intérieur de l'ensemble cylindre, et pendant que le piston se déplace approximativement entre la position de point mort inférieure à l'intérieur de l'ensemble cylindre jusqu'à une position de point mort supérieure à l'intérieur de l'ensemble cylindre ; et
la détection d'un cognement dans l'ensemble cylindre comprenant la détection d'un cognement dans l'ensemble cylindre correspondant à l'au moins un capteur de détection de cognement lorsque le signal de cognement dépasse la valeur seuil de signal.

8. Dispositif de commande de moteur d'avion selon la revendication 7, dans lequel le dispositif de commande de moteur d'avion est configuré pour réduire un point d'allumage d'une bougie d'allumage supportée par l'ensemble cylindre, lors du réglage du paramètre de fonctionnement du cylindre de l'ensemble cylindre correspondant à l'au moins un capteur de détection de cognement.

9. Dispositif de commande de moteur d'avion selon la revendication 8, dans lequel le dispositif de commande de moteur d'avion est configuré pour caractériser une intensité de signal du signal d'entrée par rapport à la valeur seuil de signal ; et
lors de la réduction du point d'allumage de la bougie d'allumage supportée par l'ensemble cylindre, (i) réduire le point d'allumage de la bougie d'allumage supportée par l'ensemble cylindre d'un premier degré en réponse à la caractérisation du signal d'entrée comme ayant une première intensité de signal par rapport à la valeur seuil de signal, et (ii) réduire le point d'allumage de la bougie d'allumage supportée par l'ensemble cylindre d'un deuxième degré en réponse à la caractérisation du signal d'entrée comme ayant une deuxième intensité de signal par rapport à la valeur seuil de signal, la première intensité de signal étant inférieure à la deuxième intensité de signal, et le premier degré de réduction du point d'allumage étant inférieur au deuxième degré de réduction du point d'allumage.

10. Dispositif de commande de moteur d'avion selon la revendication 7, dans lequel le dispositif de commande de moteur d'avion est configuré pour augmenter un volume de carburant alimenté vers l'ensemble cylindre par une pompe à carburant, lors du réglage du paramètre de fonctionnement du cylindre de l'ensemble cylindre correspondant à l'au moins un capteur de détection de cognement.

11. Dispositif de commande de moteur d'avion selon la revendication 10, dans lequel le dispositif de commande de moteur d'avion est configuré pour caractériser une intensité de signal du signal d'entrée par rapport à la valeur seuil de signal ; et
lors de l'augmentation du volume de carburant alimenté vers l'ensemble cylindre par la pompe à carburant, (i) augmenter le volume de carburant alimenté vers l'ensemble cylindre par la pompe à carburant d'un premier degré, en réponse à la caractérisation du signal d'entrée comme ayant une première intensité par rapport à la valeur seuil de signal, et (ii) augmenter le volume de carburant alimenté vers l'ensemble cylindre par la pompe à carburant d'un deuxième degré, en réponse à la caractérisation du signal d'entrée comme ayant une deuxième intensité par rapport à la valeur seuil de signal, la première intensité de signal étant inférieure à la deuxième intensité de signal, et le premier degré d'augmentation de volume de carburant étant inférieur au deuxième degré d'augmentation de volume de carburant.

12. Dispositif de commande de moteur d'avion selon la revendication 7, dans lequel le dispositif de commande de moteur d'avion est configuré pour :
comparer un niveau de charge moteur avec un seuil de charge moteur, le niveau de charge moteur étant basé sur une vitesse de moteur du moteur d'avion, une température d'entrée d'ensemble cylindre estimée, et une température d'ensemble cylindre moyenne pour les ensembles de cylindres du moteur d'avion ; et
lors de la réception du signal d'entrée depuis l'au moins un capteur de détection de cognement, recevoir le signal d'entrée depuis l'au moins un capteur de détection de cognement lorsque le niveau de charge moteur dépasse le seuil de charge moteur.
